(19) Europäisches Patentamt
European Patent Office
Office européen des brevets

(11) EP 3 290 117 A1

(12) **EUROPEAN PATENT APPLICATION**

(43) Date of publication:
**07.03.2018 Bulletin 2018/10**

(51) Int Cl.:
***B01L 3/00*** *(2006.01)*

(21) Application number: **17187170.0**

(22) Date of filing: **22.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.08.2016 US 201615251574**

(71) Applicant: **Sharp Life Science (EU) Limited**
**Oxford OX4 4GB (GB)**

(72) Inventors:
- **TAYLOR, Peter Neil**
**Oxford, Oxfordshire OX4 4GB (GB)**
- **HUANG, Laura**
**Oxford, Oxfordshire OX4 4GB (GB)**
- **HADWEN, Benjamin James**
**Oxford, Oxfordshire OX4 4GB (GB)**
- **DOTHIE, Pamela Ann**
**Oxford, Oxfordshire OX4 4GB (GB)**

(74) Representative: **Suckling, Andrew Michael**
**Marks & Clerk LLP**
**Fletcher House**
**Heatley Road**
**The Oxford Science Park**
**Oxford OX4 4GE (GB)**

# (54) ELECTROWETTING ON DIELECTRIC DEVICE INCLUDING SURFACTANT CONTAINING SILOXANE GROUP

(57) An electrowetting on dielectric device includes: (a) a first substrate comprising electrodes at a surface of the first substrate configured to effect electrowetting mediated droplet operations; (b) a second substrate spaced from the surface of the first substrate to define an interior volume between the first substrate and the second substrate; (c) a liquid droplet disposed in the interior volume; and (d) a filler fluid disposed in the interior volume and surrounding the liquid droplet, wherein one or both of the liquid droplet and filler fluid contains a surfactant, the surfactant comprising a siloxane group represented by the structural formula:

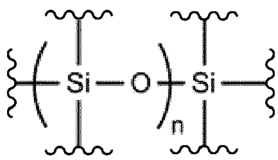

where n≥1.

EP 3 290 117 A1

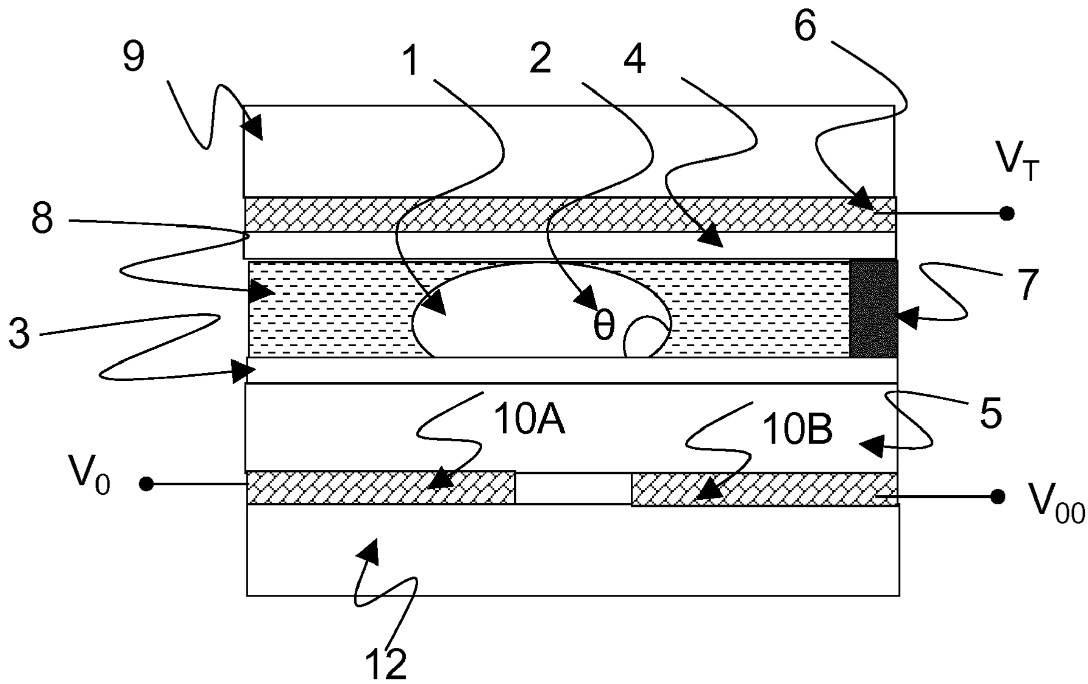


Figure 1

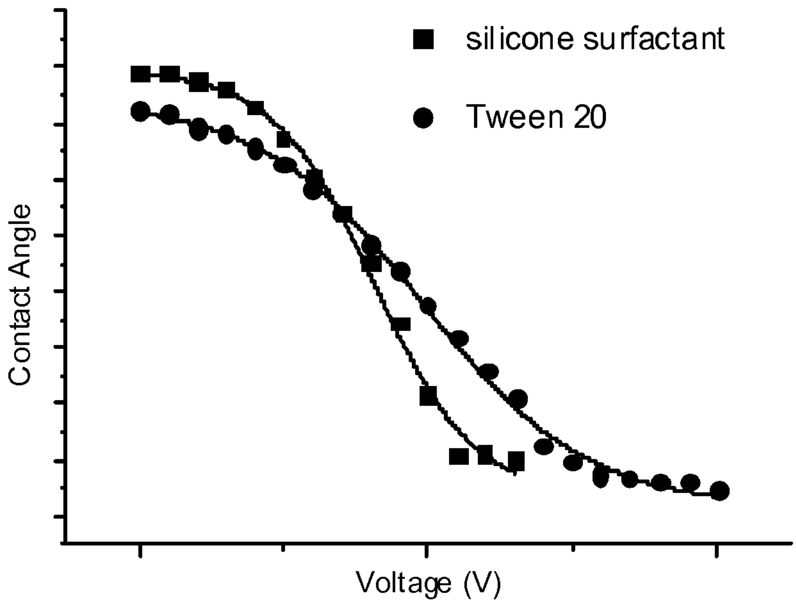


Figure 4

## Description

### TECHNICAL FIELD

The present disclosure relates to active matrix arrays and elements thereof. In a particular aspect, the present disclosure relates to digital microfluidics, and more specifically to Electrowetting on Dielectric (EWOD) devices such as Active Matrix Electrowetting on Dielectric (AM-EWOD) devices. The disclosure further relates to fluids that enable low-voltage operation of such devices.

### BACKGROUND ART

Electrowetting on Dielectric (EWOD) is a technique for manipulating droplets of fluid by application of an electric field. It is thus a candidate technology for digital microfluidics for lab-on-a-chip technology. An introduction to the basic principles of this technology can be found in "Digital microfluidics: is a true lab-on-a-chip possible?" R.B. Fair, Microfluid Nanofluid (2007) 3:245-281.

Figure 1 shows a part of a conventional EWOD device in cross section. The device includes a lower substrate 12, the uppermost layer of which is formed from a conductive material which is patterned so that a plurality of electrodes 10 (e.g., 10A and 10B in Figure 1) are realized. The electrodes of a given array element may be termed the element electrode 10. The liquid droplet 1, including a polar material (which is commonly also aqueous and/or ionic), is constrained in a plane between the lower substrate 12 and a top substrate 9. A suitable gap between the two substrates may be realized by means of a spacer 7 and a filler fluid 8 may be used to occupy the volume not occupied by the liquid droplet 1. The filler fluid 8 is typically non-polar and immiscible, or substantially immiscible with the liquid droplet 1 being manipulated. An insulator layer 5 disposed upon the lower substrate 12 separates the conductive element electrodes 10A and 10B from a first hydrophobic coating 3 upon which the liquid droplet 1 sits with a contact angle 2 represented by $\theta$. The first hydrophobic coating 3 is formed from a hydrophobic material (commonly, but not necessarily, a fluoropolymer).

On the top substrate 9 is a second hydrophobic coating 4 with which the liquid droplet 1 may come into contact. The second hydrophobic coating 4 is formed from a hydrophobic material (commonly, but not necessarily, a fluoropolymer). Interposed between the top substrate 9 and the second hydrophobic coating 4 is a reference electrode 6.

The contact angle $\theta$ 2 of the liquid droplet 1 and the first hydrophobic coating 3 is defined as shown in Figure 1. The contact angle $\theta$ is provided by the balancing of the surface tension components between the solid/droplet ($\gamma_{SL}$), non-ionic fluid/droplet ($\gamma_{LG}$) and solid/non-ionic fluid ($\gamma_{SG}$) interfaces, and satisfies Young's law. The contact angle is related to the surface tensions components in accordance with equation 1:

$$\cos\theta = \frac{\gamma_{SG} - \gamma_{SL}}{\gamma_{LG}} \qquad \text{(equation 1)}$$

In operation, voltages termed the EW drive voltages (e.g. $V_T$, $V_0$ and $V_{00}$ in Figure 1) may be externally applied to different electrodes (e.g. element electrodes 6, 10A and 10B, respectively). The resulting electrical forces that are set up effectively control the hydrophobicity of the hydrophobic coating 3. By arranging for different EW drive voltages (e.g. $V_0$ and $V_{00}$) to be applied to different element electrodes (e.g. 10A and 10B), the liquid droplet 1 may be moved in the lateral plane between the two substrates 9 and 12.

The Lippmann-Young equation, shown below in equation 2, describes how the electrowetting voltage (V) affects the contact angle. In equation 2, C is the capacitance of the insulator layer 5 and hydrophobic coating 3 which forms the interface between the droplet 1 and the hydrophobic surface, $\theta_o$ is the contact angle when no voltage is applied, and $\gamma_{LG}$ is the surface tension component of the non-ionic fluid/droplet.

$$\cos\theta = \cos\theta_0 + \frac{CV^2}{2\gamma_{LG}} \qquad \text{(equation 2)}$$

Active Matrix EWOD (AM-EWOD) refers to implementation of EWOD in an active matrix array incorporating transistors, for example by using thin film transistors (TFTs).

United States Patent No. US6565727 (Shenderov, issued May 20, 2003) discloses a passive matrix EWOD

device for moving droplets through an array. United States Patent No. US6565727 further discloses methods for other droplet operations including the splitting and merging of droplets, and the mixing together of droplets of different materials.

United States Patent No. US6911132 (Pamula et al., issued June 28, 2005) discloses a two dimensional EWOD array to control the position and movement of droplets in two dimensions.

United States Patent No. US7163612 (Sterling et al., issued Jan. 16, 2007) describes how TFT based thin film electronics may be used to control the addressing of voltage pulses to an EWOD array by using circuit arrangements very similar to those employed in AM display technologies. The approach of US7163612 may be termed "Active Matrix Electrowetting on Dielectric" (AM-EWOD).

European Patent Application No. EP2404675 (Hadwen et al., published January 11, 2012) describes array element circuits for an AM-EWOD device.

The addition of a surfactant is known to greatly enhance the electrowetting effect as described by O. Raccurt et. al. (J. Micromech. Microeng. 17 (2007) 2217-2223).

United States Patent No. US 8481125 (Yi et al., issued July 9, 2013) describes how certain lipophilic polymers can be used to reduce biofouling in electrowetting devices. Biofouling is a process where chemicals or bio molecules adhere undesirably to a surface.

The use of surfactants which are soluble in the filler fluid of an electrowetting system is described by L. S. Roach et al. (Analytical Chemistry, 2005, 77(3), 785-796).

United States Patent No. US 8980198 (Srinivasan et al., issued March 17, 2015) lists some possible surfactants that are soluble in the filler fluid and may be used in electrowetting devices.

## SUMMARY OF INVENTION

In accordance with one aspect of the present disclosure, an electrowetting on dielectric device, includes: (a) a first substrate including electrodes at a surface of the first substrate configured to effect electrowetting mediated droplet operations; (b) a second substrate spaced from the surface of the first substrate to define an interior volume between the first substrate and the second substrate; (c) a liquid droplet disposed in the interior volume; and (d) a filler fluid disposed in the interior volume and surrounding the liquid droplet, wherein one or both of the liquid droplet and filler fluid contains a surfactant, the surfactant including a siloxane group represented by the structural formula:

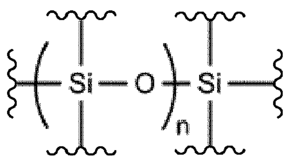

where n≥1.

In accordance with another aspect of the present disclosure, a microfluidic system comprises:

(1) an electrowetting on dielectric device, comprising:

(a) a first substrate comprising electrodes at a surface of the first substrate configured to effect electrowetting mediated droplet operations; and

(b) a second substrate spaced from the surface of the first substrate to define an interior volume between the first substrate and the second substrate;

(2) a filler fluid; and

(3) one or more reagents configured, upon input into the device, to create droplets in the interior volume of the electrowetting on dielectric device;

wherein one or both of the liquid droplet and filler fluid contains a surfactant comprising a siloxane group represented by the structural formula:

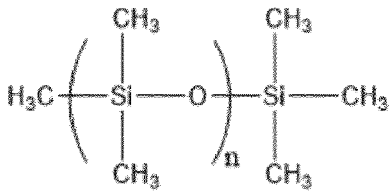

where n≥1.

In the above aspects the filler fluid may comprise one or more oils, for example it may comprise one or more hydrocarbon oils, and/or one or more silicone oils. The filler fluid may further contain other additives, including a surfactant (specifically a siloxane-containing surfactant as defined above).

For the avoidance of doubt, as used herein a "Silicone oil" is an oil with a [-Si-O-Si-O] backbone. An "oil" is any neutral, nonpolar chemical substance which is liquid at ambient temperature.

In some embodiments, the surfactant is provided at a concentration ranging from about 0.001 to about 10% w/w in the liquid droplet or the filler fluid.

In some embodiments, the filler fluid includes a silicone oil.

In some embodiments, the filler fluid includes a silicone oil represented by the structural formula:

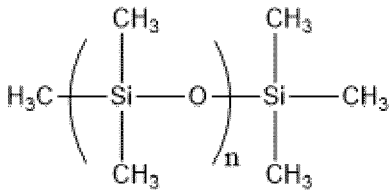

where 7>n>1.

In some embodiments, the filler fluid includes a hydrocarbon oil.

In some embodiments, the surfactant has no overall charge.

In some embodiments, the surfactant is anionic or cationic.

In some embodiments, the surfactant further includes a polyol.

In some embodiments, the surfactant further includes polyethylene glycol.

In some embodiments, the surfactant further includes polyoxyethylene glycol ($-(CH_2CH_2-O-)_n$) where n≥1.

In some embodiments, the surfactant further includes polyoxypropylene glycol ($-(CH_2CHCH_3-O-)_n$) where n≥1.

In some embodiments, the surfactant further includes a hydrocarbon chain ($CH_2$)n where n≥1.

In some embodiments, the surfactant is represented by the structural formula:

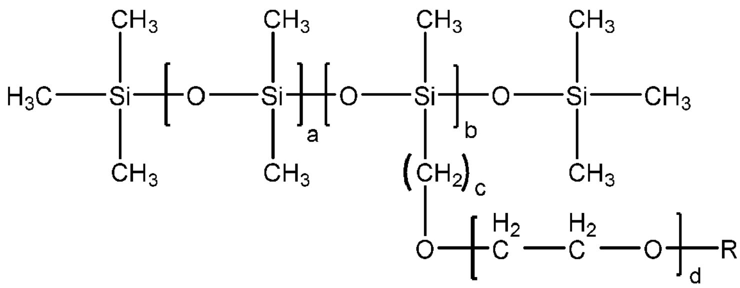

wherein a ≥ 1, b ≥ 1, c ≥ 1, and d ≥ 1; and R= -H or $-CH_3$.

In some embodiments, the surfactant is represented by the structural formula:

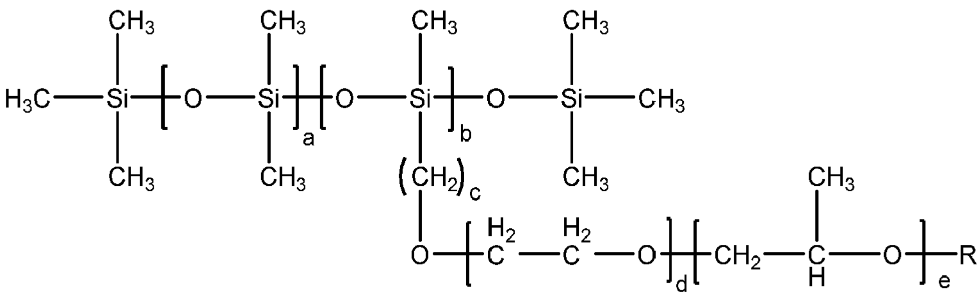

wherein a ≥ 1, b ≥ 1, c ≥ 1, d ≥ 1, and e ≥ 1; and R= -H or $-CH_3$.

In some embodiments, the surfactant is represented by the structural formula:

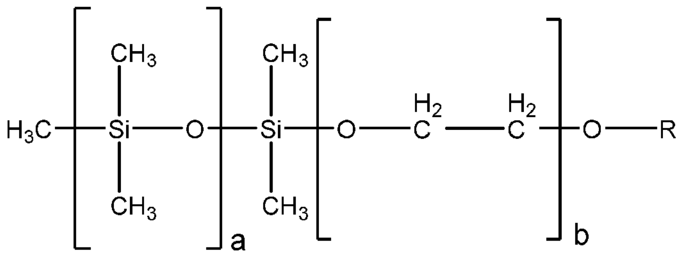

wherein a ≥ 1 and b ≥ 1; and R= -H or $-CH_3$.

In some embodiments, the surfactant is represented by the structural formula:

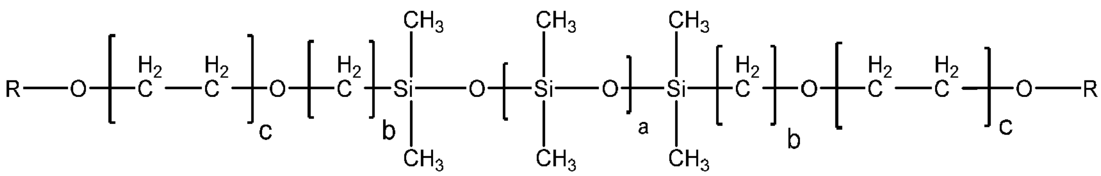

wherein a ≥ 1, b ≥ 1, and c ≥ 1; and R is H-, $CH_3$-, $CH_3CH_2$-, Phenyl- ($H_5C_6$-), Benzyl- ($H_5C_6CH_2$-), Tolyl- ($CH_3H_5C_6$-), a partially or fully fluorinated alkyl or other suitable group.

In some embodiments, the surfactant is represented by the structural formula:

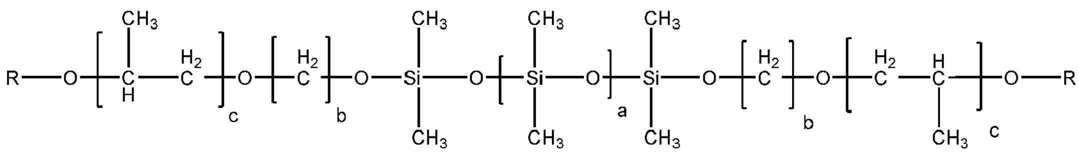

where a≥1, b≥1 and c≥1; and R is H-, $CH_3$-, $CH_3CH_2$-, Phenyl- ($H_5C_6$-), Benzyl-($H_5C_6CH_2$-), Tolyl- ($CH_3H_5C_6$-), a partially or fully fluorinated alkyl or other suitable group.

In some embodiments, the surfactant is represented by the structural formula:

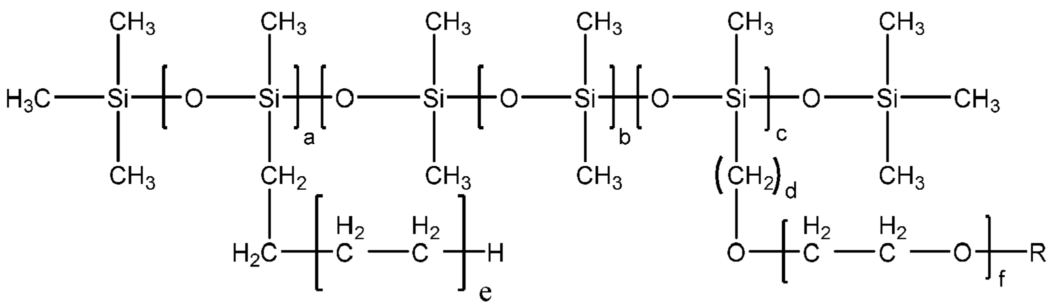

wherein a ≥ 1, b ≥ 1, c ≥ 1, d ≥ 1, e ≥ 1, and f ≥ 1; and R= -H or $-CH_3$.

In some embodiments, the surfactant is represented by the structural formula:

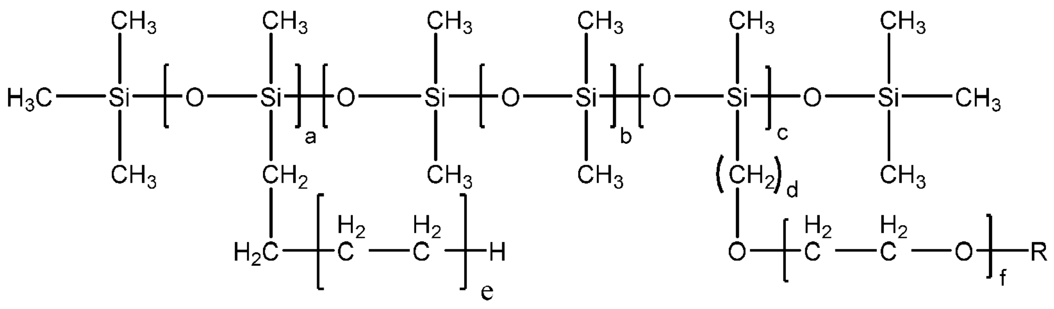

where a≥1, b≥1, c≥1, d≥1, e≥, and f≥1; and R is H-, $CH_3$-, $CH_3CH_2$-, Phenyl-($H_5C_6$-), Benzyl- ($H_5C_6CH_2$-), Tolyl-($CH_3H_5C_6$-), a partially or fully fluorinated alkyl or other suitable group.

In some embodiments, the surfactant is represented by the structural formula:

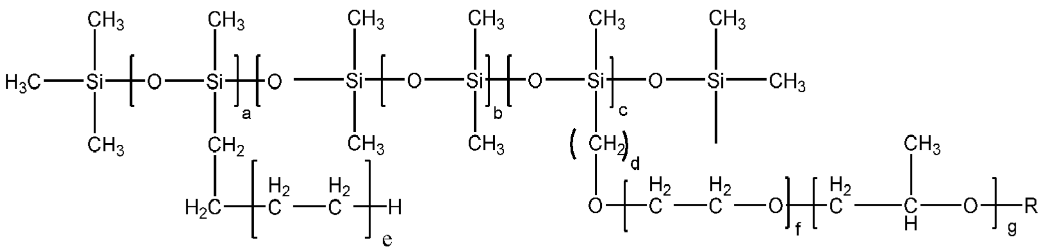

where a≥1, b≥1, c≥1, d≥1, e≥, f≥1 and g≥1; and R is H-, $CH_3$-, $CH_3CH_2$-, Phenyl-($H_5C_6$-), Benzyl- ($H_5C_6CH_2$-), Tolyl-($CH_3H_5C_6$-), a partially or fully fluorinated alkyl or other suitable group.

In some embodiments, the surfactant is represented by the structural formula:

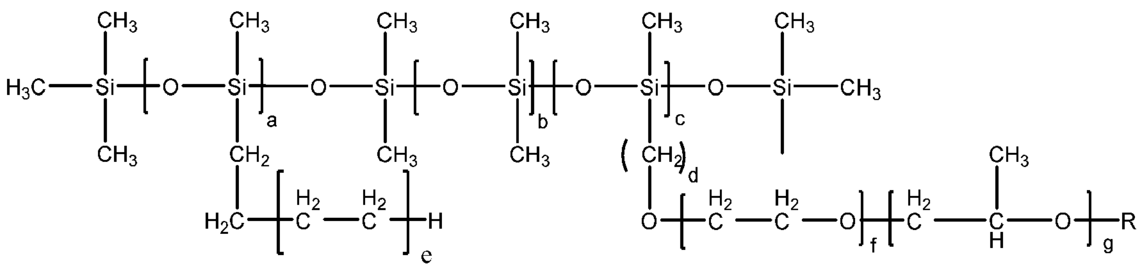

wherein a ≥ 1, b ≥ 1, c ≥ 1, d ≥ 1, e ≥ 1, f ≥ 1, and g ≥ 1; and R= -H or $-CH_3$. In preferred embodiments e=14 and f/g =10.

In some embodiments, the filler fluid contains the surfactant, the surfactant soluble in the filler fluid. In some embodiments, the liquid droplet contains an additional surfactant (where "additional" means in addition to the surfactant in the filler fluid). In these embodiments the additional surfactant in the liquid droplet may be the same as or different to the surfactant in the filler fluid, and may include a siloxane group represented by the structural formula:

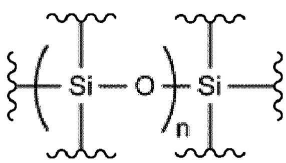

In some embodiments, the liquid droplet contains the surfactant and the surfactant is soluble in the liquid droplet.

Another aspect of the present invention provides a method comprising:

providing a surfactant in one or both of a liquid droplet and a filler fluid; and

introducing the liquid droplet and the filler fluid into an interior volume of an electrowetting on dielectric device, the

device comprising: (a) a first substrate comprising electrodes at a surface of the first substrate configured to effect electrowetting mediated droplet operations; and (b) a second substrate spaced from the surface of the first substrate to define the interior volume between the first substrate and the second substrate;

wherein the surfactant comprises a siloxane group represented by the structural formula:

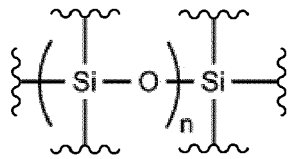

where n≥1.

Another aspect of the present invention provides a filler fluid for an electrowetting on dielectric device, the filler fluid consisting essentially of one or more oils and a surfactant comprising a siloxane group represented by the structural formula:

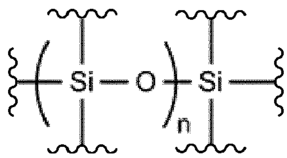

where n≥1;

wherein the surfactant is provided at a concentration ranging from about 0.001 to about 10% w/w in the filler fluid.

Another aspect of the present invention provides a composition consisting essentially of one or more oils and a surfactant comprising a siloxane group represented by the structural formula:

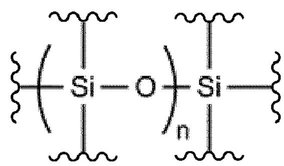

where n≥1;

wherein the surfactant is provided at a concentration ranging from about 0.001 to about 10% w/w in the filler fluid.

In some embodiments, the one or more oils include a silicone oil.

In some embodiments, the one or more oils include a silicone oil represented by the structural formula:

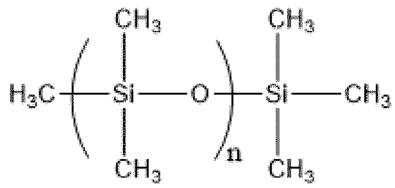

where 7>n>1.

In some embodiments, the filler fluid additionally or alternatively includes a hydrocarbon oil.

In some embodiments, the surfactant has no overall charge.

In some embodiments, the surfactant is anionic or cationic.

In some embodiments, the surfactant further includes a polyol.

In some embodiments, the surfactant further includes polyethylene glycol.

In some embodiments, the surfactant further includes polyoxyethylene glycol ($-(CH_2CH_2-O-)_n$) where n≥1.

In some embodiments, the surfactant further includes polyoxypropylene glycol ($-(CH_2CHCH_3-O-)_n$) where n≥1.

In some embodiments, the surfactant further includes a hydrocarbon chain $(CH_2)n$ where n≥1.

In some embodiments, the surfactant is represented by one of the structural formulae (B) and (E) to (R) set out below.

Another aspect of the present invention provides a use of a composition as defined above, the use comprising

using the composition as a filler fluid in an electrowetting on dielectric device. The use may comprise: introducing the composition and one or more liquid droplets into an interior volume of an electrowetting on dielectric device comprising: (a) a first substrate comprising electrodes at a surface of the first substrate configured to effect electrowetting mediated droplet operations; and (b) a second substrate spaced from the surface of the first substrate to define the interior volume between the first substrate and the second substrate.

Another aspect of the present invention provides a use of a surfactant comprising a siloxane group represented by the structural formula:

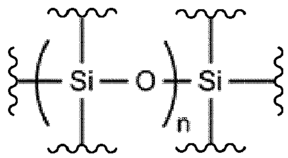

where $n \geq 1$,

the use comprising: providing the surfactant in one or both of a liquid droplet and a filler fluid, and introducing the liquid droplet and the filler fluid into an interior volume of an electrowetting on dielectric device comprising: (a) a first substrate comprising electrodes at a surface of the first substrate configured to effect electrowetting mediated droplet operations; and (b) a second substrate spaced from the surface of the first substrate to define the interior volume between the first substrate and the second substrate.

The use may comprise providing the surfactant at a concentration ranging from about 0.001 to about 10% w/w in the filler fluid or the liquid droplet..

Any feature described with reference to one aspect or embodiment of the invention may be incorporated in any other aspect or embodiment described herein.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

## BRIEF DESCRIPTION OF DRAWINGS

In the annexed drawings, like references indicate like parts or features:

Figure 1 shows a schematic diagram depicting a conventional EWOD device in cross-section.

Figure 2 is a schematic diagram depicting an AM-EWOD device in perspective in accordance with a first and exemplary embodiment of the present disclosure.

Figure 3 shows a cross section through some of the array elements of the exemplary AM-EWOD device of Figure 2.

Figure 4 shows the electrowetting curve of a conventional aqueous surfactant (tween 20) compared to the surfactants containing a siloxane group (silicone surfactant) in accordance with the present disclosure.

## DESCRIPTION OF REFERENCE NUMERALS

| | |
|---|---|
| 1 | liquid droplet |
| 2 | contact angle θ |
| 3 | First hydrophobic coating |
| 4 | Second hydrophobic coating |
| 5 | Insulator layer |
| 6 | Reference electrode |
| 7 | Spacer |
| 8 | Filler fluid |
| 9 | Top substrate |

| | |
|---|---|
| 10, 10A, 10B | Array Element Electrodes |
| 11 | Electrode array |
| 12 | Lower substrate |
| 13 | Thin film electronics |

## DETAILED DESCRIPTION OF INVENTION

Figure 2 is a schematic diagram depicting an AM-EWOD device in accordance with a first and exemplary embodiment of the present disclosure. In the description that follows, the features of the present disclosure are described primarily in the context of an AM-EWOD device. It will, however, be understood that the features of the present disclosure are equally applicable, for example, to other EWOD devices in general.

The AM-EWOD device shown in Figure 2 has a lower substrate 12 with thin film electronics 13 disposed upon the lower substrate 12. The thin film electronics 13 are arranged to drive the array element electrodes 10. A plurality of array element electrodes 10 are arranged in an electrode array 11, having X by Y elements where X and Y may be any integer. A liquid droplet 1, which may include any polar liquid and which typically may be ionic and/or aqueous, is enclosed between the lower substrate 12 and a top substrate 9. It will be appreciated that in some embodiments, multiple liquid droplets 1 can be present. A suitable gap between the two substrates may be realized by means of a spacer 7, and a filler fluid 8 may also be provided in the gap between the two substrates. The filler fluid 8 may be, for example, an alkane, a silicone oil or other non-polar liquid. The filler fluid 8 may contain a surfactant.

In some embodiments, the surfactant (e.g., contained within the filler fluid 8) may contain a siloxane functional group represented by the following structural formula A.

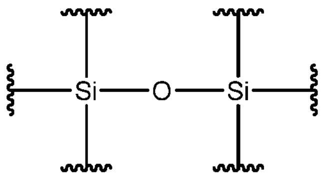

(A)

The surfactant may contain one or more siloxane units. Hence, the surfactant may be regarded as containing one or more siloxane groups which may be represented by the following structural formula B:

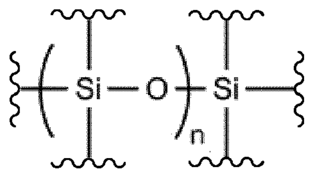

(B)

where n≥1.

Surfactants containing structural formulas A or B may provide one or more advantages in electrowetting devices, including:

- High solubility in oils for use in EWOD devices, e.g. silicone oils.
- Facilitating a reduction of biofouling of hydrophobic surfaces.
- Compatibility with (bio)chemical transformation occurring in the liquid droplet.
- Low surface energy associated with the interface between the filler fluid and the polar liquid being manipulated. This facilitates droplet manipulation at lower electrowetting voltages than is possible for conventional surfactants. This feature may be particularly advantageous for AM-EWOD devices where there is a desire to minimize electrowetting voltage in accordance with the capabilities of the TFTs.
- Compatibility with other surfactants present in the polar droplets. In exemplary embodiments the filler fluid of the present disclosure may be used in conjunction with additional surfactants added to the polar (e.g. aqueous droplets). In such embodiments there may be additional advantages compared to using just a single surfactant or surfactants within just one of the phases.

These advantages may enable AM-EWOD devices to perform a wide range of commercially relevant (bio)chemical transformations which would have otherwise been elusive.

Figure 3 is a schematic diagram depicting an exemplary pair of the array elements 10A and 10B in cross section that may be utilized in the AM-EWOD device of Figure 2. The device configuration of Figures 3 bears similarities to the conventional configuration shown in Figure 1, with the AM-EWOD device of Figure 3 further incorporating the thin-film electronics 13 disposed on the lower substrate 12. The uppermost layer of the lower substrate 12 (which may be considered a part of the thin film electronics layer 13) is patterned so that a plurality of the array element electrodes 10 (e.g., 10A and 10B in Figure 3) are realized. These may be termed the array element electrodes 10. The term "array element electrode" in the following description may refer to the electrode 10 associated with a particular array element, and also to the node of an electrical circuit directly connected to this element electrode 10. The reference electrode 4 is also disposed upon the top substrate 9 to realize an in-plane reference electrode geometry.

Generally, an exemplary AM-EWOD device that includes thin film electronics 13 is configured as follows. The AM-EWOD device includes a reference electrode 6 (e.g., an in-plane reference electrode 6) and a plurality of array elements, each array element including an array element electrode (e.g., array element electrodes 10).

Relatedly, the AM-EWOD device may be configured to perform a method of controlling an electrowetting voltage to be applied to a plurality of array 11 elements. The AM-EWOD may include reference electrode 6 and a plurality of array elements, each array element including an array element electrode 10. The electrowetting voltage at each array element may be defined by a potential difference between the array element electrode 10 and the reference electrode 6. The method of controlling the electrowetting voltage includes the steps of writing a voltage to at least a portion of the array element electrodes 10, and supplying a voltage signal to the reference electrode 6.

In operation the AM-EWOD device may be configured to perform droplet operation in accordance with the sequence by which the element electrodes are activated. Exemplary droplet operations include:

- Moving droplets (from one array element to another).
- Mixing droplets together (by merging and agitation).
- Splitting droplets (e.g., into two halved droplets).
- Dispensing of a small droplet from a large reservoir droplet.
- Inputting droplets onto the array from large input reservoirs, which may interface the device with the outside world.

In order for the AM-EWOD device to carry out this range of operations, a large change in contact angle should be able to result from a small electrowetting voltage. For this reason, it may be preferable and advantageous to use a surfactant within the system to lower the surface tension and reduce the electrowetting voltage.

In AM-EWOD devices it may be particularly desirable and advantageous to reduce the electrowetting voltage in order to facilitate droplet manipulation at electrowetting voltages that are compatible with the maximum ratings of standard TFT devices (e.g., fabricated by standard Liquid Crystal Display manufacturing process). Possible technologies for fabricating the TFT backplane may include polysilicon TFT, oxide TFT (e.g. Indium Gallium Zinc Oxide TFT), amorphous silicon TFTs or organic TFTs.

It may also be advantageous to minimize the electrowetting voltage in order to reduce the power consumed by the TFT circuitry. Furthermore, it may be advantageous to minimize the electrowetting voltage to reduce the electric field through the insulator and hydrophobic coating layers included as part of the AM-EWOD device. This may improve device reliability and manufacturing.

In some embodiments, the AM-EWOD device may be operated with oil as the filler fluid. The advantages of using an oil (rather than air) are:

- Use of an oil (compared to air) may lower the surface tension and therefore the voltage required to perform droplet manipulation operations.
- Use of an oil may prevent evaporation of the liquid droplet.
- Use of an oil may assist in preventing bio-fouling.

Whilst in principle EWOD devices can use a number of different of oils for the filler fluid, there are practical considerations that may make certain materials preferable. These include:

- Stability over the range of temperatures required by the application.
- Bio-compatibility, so as not to adversely influence the chemistry of the polar liquid droplet.
- Low toxicity - to enable uptake in a wide application space.
- Low viscosity - to enable rapid droplet movement.
- Low volatility - to prevent evaporation during operation.
- Compatibility with bio(chemical) processes - to enable a wide range of bio(chemistries).
- Low reactivity.

- Low electrical conductivity.

The inventors have found that silicone oils in general may fulfill one or more of the above-described criteria. Silicone oils include a group represented by the following structural formula C:

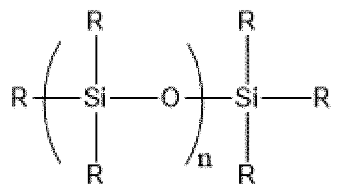

(C)

wherein n≥1 and R is H-, $CH_3$-, $CH_3CH_2$-, Phenyl- ($H_5C_6$-), Benzyl- ($H_5C_6CH_2$-), Tolyl- ($CH_3H_5C_6$-), a partially or fully fluorinated alkyl or another suitable functional group.
The silicone oil may also have a cyclic structure as in for example decamethylcyclopentasiloxane.
Silicone oils may be used as lubricants and hydraulic fluids due to being non-flammable unlike their carbon analogues. In addition, silicone oils are excellent electrical insulators, have good temperature stability and have good heat-transfer characteristics.
More specifically, the inventors have found that silicone oils represented by the following structural formula D may be suited to AM-EWOD application, as such silicone oils may further fulfill the above described criteria for volatility and/or viscosity:

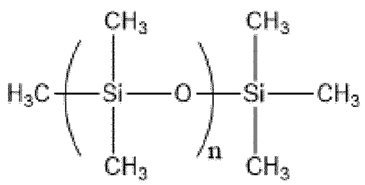

(D)

where 7>n>1.
The AM-EWOD devices in accordance with the present disclosure may be operated with a surfactant included in either the oil or the liquid droplet. The use of a surfactant may lower the surface tension and may facilitate droplet operations at low voltage.
There may be several advantages of using surfactants which are soluble in the filler fluid. These include:

- The surfactant may, in some embodiments, only be added to one system component (e.g., the filler fluid) and not to each of the liquid droplets individually. (In other embodiments the surfactant may be added to the liquid droplet(s) only, or may be added to both the filler fluid and to the liquid droplet(s).)
- A surfactant added to the filler fluid may be less likely to interfere with any chemistry or bio-chemistry occurring within the liquid droplet.
- A surfactant added to the filler fluid may help to prevent bio-fouling of the surface of the hydrophobic coating.

One issue with the use of silicone oil is that many conventional surfactants are insoluble in silicone oils even at low concentration. But in accordance with the present disclosure, the inventors have found that surfactants containing siloxane units as described above in connection with structural formulas A and B may be soluble in silicone oils and utilized as the surfactant in connection with the EWOD device. The present disclosure may thus realize a filler fluid including a combination of an oil material and a surfactant, that may have several advantageous properties. These properties may be particularly advantageous for AM-EWOD systems where achieving a low electrowetting voltage is desirable. (As noted, however, the present disclosure is not limited to the surfactant being provided in the filler fluid.)
In some embodiments, the filler fluid may contain the surfactant at a concentration ranging from about 0.001 to about 15% w/w. In other embodiments, the filler fluid may contain the surfactant at a concentration ranging from about 0.001 to about 10% w/w. In other embodiments, the filler fluid may contain the surfactant at a concentration ranging from about 0.001 to about 5% w/w.
There are a large number of possible surfactant chemical structures that may include the siloxane unit as

described above in connection with structural formulas A and B. Surfactant structures include a hydrophobe (hydrophobic group) coupled to a polar (hydrophilic) functional group. It is the coupling of the hydrophobic and hydrophilic groups that give the surfactant structure its distinctive properties, for example lowering surface tension. In accordance with the present disclosure, the siloxane unit is used to form the hydrophobe of the surfactant structure. There are many possible polar (hydrophilic) groups which may be coupled to the siloxane unit to create a surfactant. In some embodiments, the hydrophilic group may be a polyol. One example of a hydrophilic group is a polyethylene glycol. In other embodiments, the hydrophilic group may be a polyoxyethylene glycol ($-(CH_2CH_2\text{-}O\text{-})_n$) where n≥1, a polyoxypropylene glycol ($-(CH_2CHCH_3\text{-}O\text{-})_n$) where n≥1, or may contain sugars or their derivatives.

In some embodiments, one or more hydrocarbon chains $(CH_2)n$ (where n≥1) may be incorporated with the hydrophobe to further increase the hydrophobicity of the hydrophobe. The hydrocarbon chain may be a straight chain, branched or contain cyclic units, and may contain aromatic and other unsaturated sub units. The hydrophobic group may contain some polar groups such as (-OH, =NH, =C=O, $-CO_2H$, -CN, -C-O-C-, -C-NH-C) while still being hydrophobic overall. The hydrocarbon chain may, in some embodiments, connect the hydrophobe with the hydrophilic group.

In some embodiments, the surfactant may include one or more functional groups with a positive charge such as quaternary amines ($-N^+R_3$), phosphonium salts ($-PR_3^+$) and sulfonium salts ($-SR_2^+$); R is H-, $CH_3$-, $CH_3CH_2$-, Phenyl- ($H_5C_6$-), Benzyl- ($H_5C_6CH_2$-), Tolyl- ($CH_3H_5C_6$-), a partially or fully fluorinated alkyl or other suitable group. In some embodiments, the surfactant may include one or more functional groups with a negative charge such as sulfates ($-OSO_3^-$), sulfonates ($-SO_3^-$), phosphates ($-OPO_3^{2-}$) and carboxylates ($-CO_2^-$). Such surfactants may have no overall charge, and in such instances may be referred to as zwitterionic surfactants. These charged groups can be incorporated into the surfactant via direct connection to the siloxane backbone or via a connecting chain such as an alkyl chain or glycol chain.

In some embodiments, the surfactant has no overall charge. In other embodiments, the surfactant is anionic. In other embodiments, the surfactant is cationic.

The following description sets forth several exemplary surfactants containing siloxane unit(s) in accordance with the present disclosure. The structures of the surfactants containing siloxane unit(s) described below are exemplary and should not be understood to be limiting the scope of the present disclosure.

One exemplary class of surfactants containing siloxane unit(s) combines the siloxane group (e.g., dimethylsiloxane) with a polyol, an example of which is represented by the following structural formula (E).

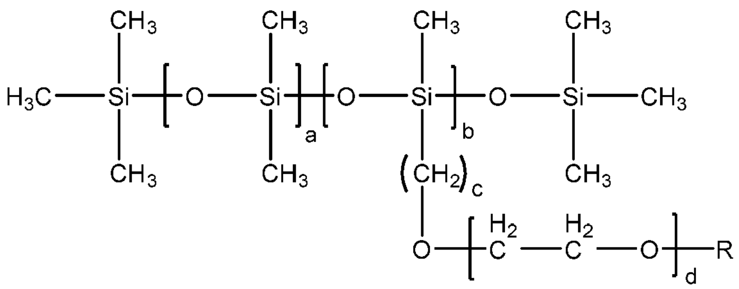

(E)

where a≥1, b≥1, c≥1 and d≥1; and R is H-, $CH_3$-, $CH_3CH_2$-, Phenyl- ($H_5C_6$-), Benzyl- ($H_5C_6CH_2$-), Tolyl- ($CH_3H_5C_6$-), a partially or fully fluorinated alkyl or other suitable group.

The values of a, b, c and d can be varied to change the total hydrophobicity of the surfactant. For example, increasing a and c may increase the hydrophobicity of the surfactant containing the siloxane unit(s) shown in structural formula (E). Increasing b and d may reduce the hydrophobicity of the surfactant containing the siloxane unit(s) shown in structural formula (E).

Another exemplary class of surfactants containing siloxane unit(s) incorporate a polyoxypropylene glycol ($-(CH_2CHCH_3\text{-}O\text{-})_n$) chain, examples of which are represented by the following structural formulas (F) and (G), respectively:

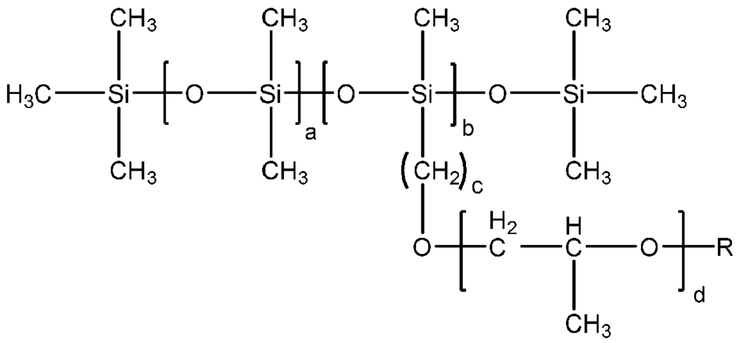

(F)

where a≥1, b≥1, c≥1, and d≥1; and R is H-, $CH_3$-, $CH_3CH_2$-, Phenyl- ($H_5C_6$-), Benzyl- ($H_5C_6CH_2$-), Tolyl- ($CH_3H_5C_6$-), a partially or fully fluorinated alkyl or other suitable group.

In structural formula (F), the values of a, b, c, and d can be varied to change the total hydrophobicity of the surfactant. For example, increasing a and c may increase the hydrophobicity of the surfactant containing the siloxane unit(s) shown in structural formula (F). Increasing b, and d may reduce the hydrophobicity of the surfactant containing the siloxane unit(s) shown in structural formula (F).

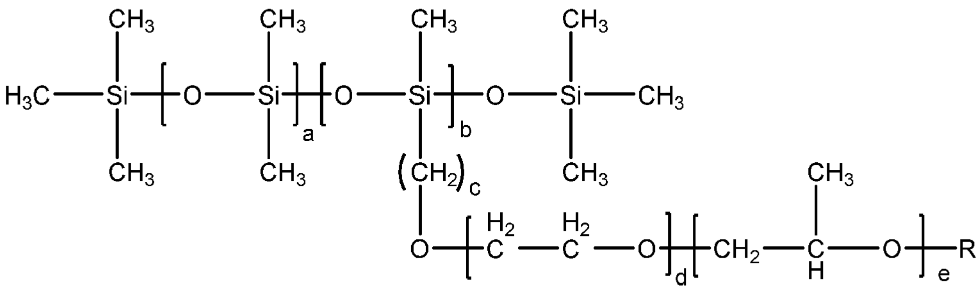

(G)

where a≥1, b≥1, c≥1 d≥1 and e≥1; and R is H-, $CH_3$-, $CH_3CH_2$-, Phenyl- ($H_5C_6$-), Benzyl- ($H_5C_6CH_2$-), Tolyl- ($CH_3H_5C_6$-), a partially or fully fluorinated alkyl or other suitable group.

In structural formula (G), the values of a, b, c, d and e can be varied to change the total hydrophobicity of the surfactant. For example, increasing a and c may increase the hydrophobicity of the surfactant containing the siloxane unit(s) shown in structural formula (G). Increasing b, d and e may reduce the hydrophobicity of the surfactant containing the siloxane unit(s) shown in structural formula (G).

Another exemplary class of surfactants containing siloxane unit(s) may be implemented as a triblock polymer, an example of which is represented by the following structural formulae (H) and (I):

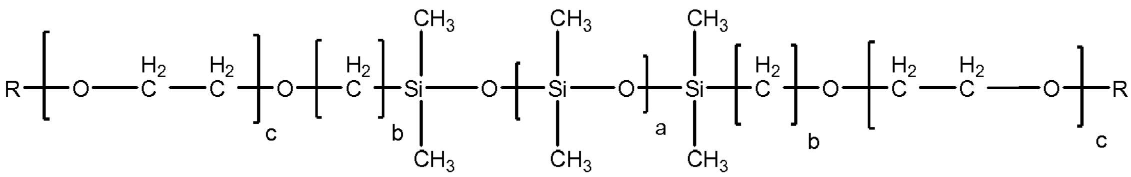

(H)

where a≥1, b≥1 and c≥1; and R is H-, $CH_3$-, $CH_3CH_2$-, Phenyl- ($H_5C_6$-), Benzyl-($H_5C_6CH_2$-), Tolyl- ($CH_3H_5C_6$-), a partially or fully fluorinated alkyl or other suitable group.

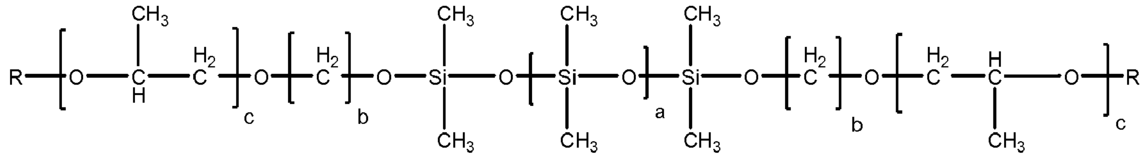

(I)

where a≥1, b≥1 and c≥1; and R is H-, $CH_3$-, $CH_3CH_2$-, Phenyl- ($H_5C_6$-), Benzyl-($H_5C_6CH_2$-), Tolyl- ($CH_3H_5C_6$-), a partially or fully fluorinated alkyl or other suitable group.

The values of a, b and c can be varied to change the total hydrophobicity of the surfactant. For example, increasing a and b may increase the hydrophobicity of the surfactant containing the siloxane unit(s) shown in structural formula (H). Increasing c may reduce the hydrophobicity of the surfactant containing the siloxane unit(s) shown in structural formula (H). In structural formula (I) the values of a, b and c can be varied to change the total hydrophobicity of the surfactant. For example, increasing a and b may increase the hydrophobicity of the surfactant containing the siloxane unit(s) shown in structural formula (I). Increasing c may reduce the hydrophobicity of the surfactant containing the siloxane unit(s) shown in structural formula (I).

Another exemplary class of surfactants containing siloxane unit(s) may include a hydrocarbon chain (e.g., a lipophilic chain) to increase its solubility in the filler fluid, examples of which is represented by the following structural formulae (J and K). The structural formulae (J and K) combine the siloxane group with a polyol, wherein a hydroxyl terminated group is included on the hydrophilic tale.

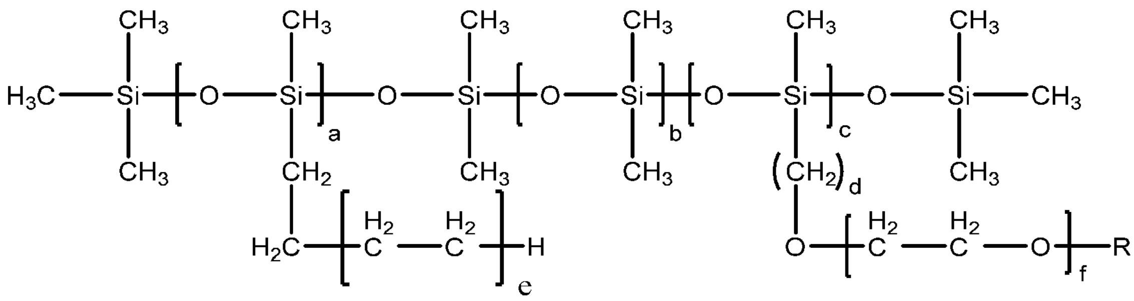

(J)

where a≥1, b≥1, c≥1, d≥1, e≥, and f≥1; and R is H-, $CH_3$-, $CH_3CH_2$-, Phenyl-($H_5C_6$-), Benzyl- ($H_5C_6CH_2$-), Tolyl-($CH_3H_5C_6$-), a partially or fully fluorinated alkyl or other suitable group.

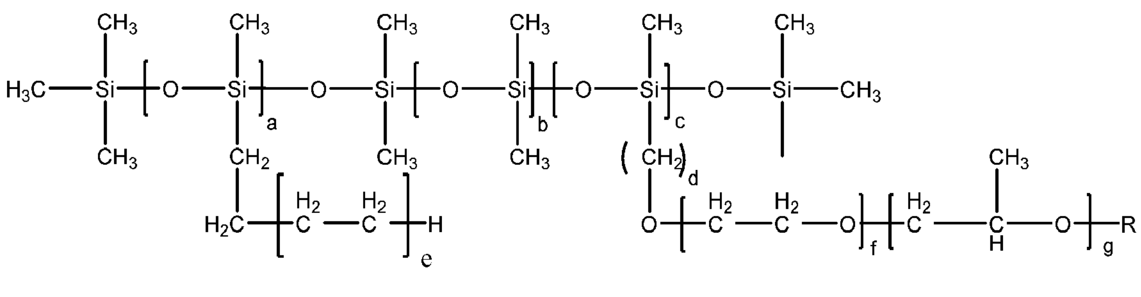

(K)

where a≥1, b≥1, c≥1, d≥1, e≥, f≥1 and g≥1; and R is H-, $CH_3$-, $CH_3CH_2$-, Phenyl-($H_5C_6$-), Benzyl- ($H_5C_6CH_2$-), Tolyl-($CH_3H_5C_6$-), a partially or fully fluorinated alkyl or other suitable group.

The values of a, b, c, d, e, f and g can be varied to change the total hydrophobicity of the surfactant. For example,

increasing a, b, d and e may increase the hydrophobicity of the surfactant containing the siloxane unit(s) shown in structural formula (J). Increasing c and f may reduce the hydrophobicity of the surfactant containing the siloxane unit(s) shown in structural formula (J). Increasing a, b, d and e may increase the hydrophobicity of the surfactant containing the siloxane unit(s) shown in structural formula (K). Increasing c, f and g may reduce the hydrophobicity of the surfactant containing the siloxane unit(s) shown in structural formula (K).

Other examples of surfactants containing siloxane unit(s) are set forth below in structural formulas (L)-(R):

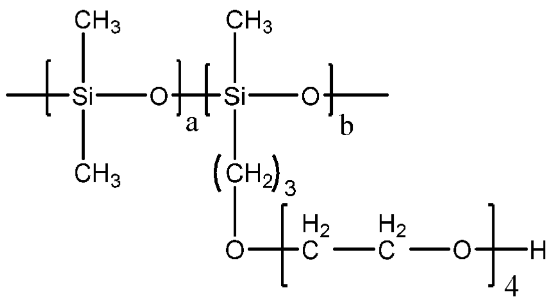

(L)

where a≥1 and b≥1.

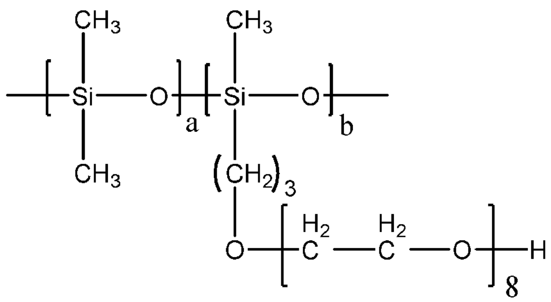

(M)

where a≥1 and b≥1.

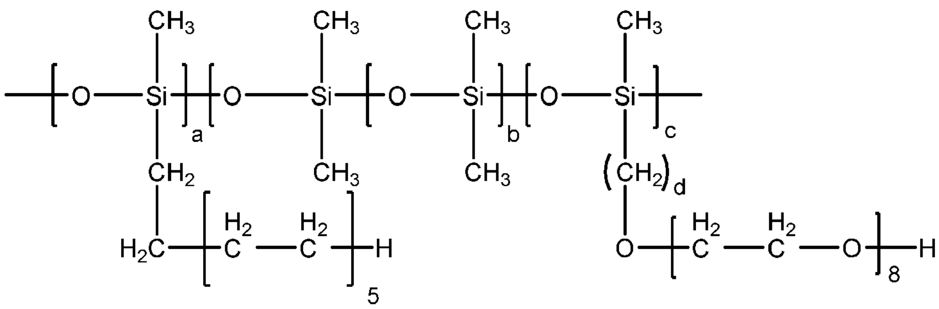

(N)

where a≥1, b≥1, c≥ and d≥1.

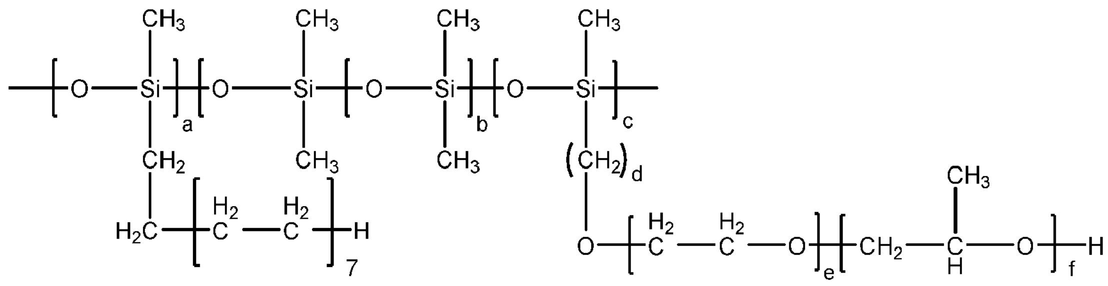

(O)

where a≥1, b≥1, c≥1, d≥1, e≥1 and f≥1.

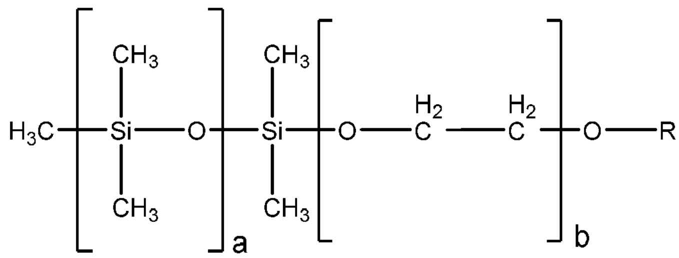

(P)

where a≥1, and b≥1; and R is H-, $CH_3$-, $CH_3CH_2$-, Phenyl- ($H_5C_6$-), Benzyl-($H_5C_6CH_2$-), Tolyl- ($CH_3H_5C_6$-), a partially or fully fluorinated alkyl or other suitable group.

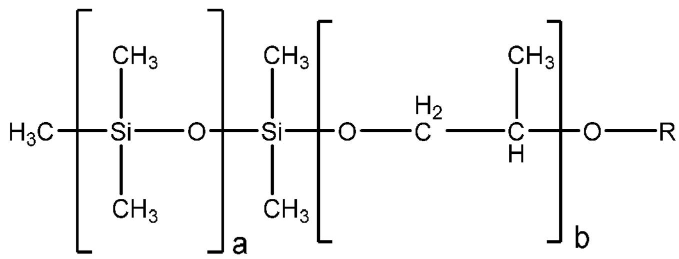

(Q)

where a≥1, and b≥1; and R is H-, $CH_3$-, $CH_3CH_2$-, Phenyl- ($H_5C_6$-), Benzyl-($H_5C_6CH_2$-), Tolyl- ($CH_3H_5C_6$-), a partially or fully fluorinated alkyl or other suitable group.

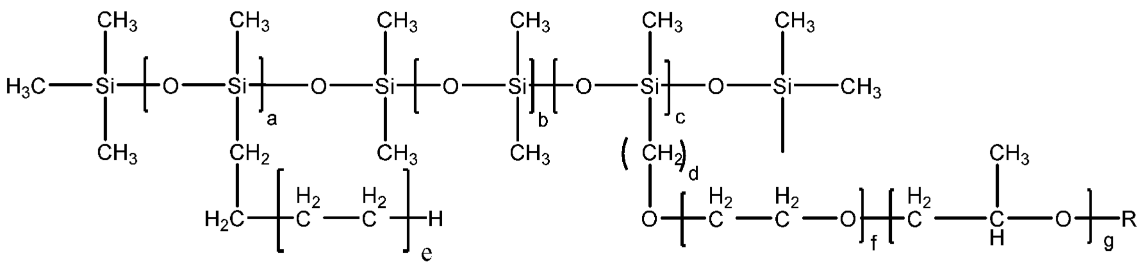

(R)

where a≥1, and b≥1; and R is H-, and preferably where e=14 and f/g =8.

In structural formula (L) the values of a and b can be varied to change the total hydrophobicity of the surfactant. For example, increasing a may increase the hydrophobicity of the surfactant containing the siloxane unit(s) shown in structural formula (L). Increasing b may reduce the hydrophobicity of the surfactant containing the siloxane unit(s) shown in structural formula (L).

In structural formula (M) the values of a and b can be varied to change the total hydrophobicity of the surfactant. For example, increasing a may increase the hydrophobicity of the surfactant containing the siloxane unit(s) shown in structural formula (M). Increasing b may reduce the hydrophobicity of the surfactant containing the siloxane unit(s) shown in structural formula (M).

In structural formula (N) the values of a, b, c and d can be varied to change the total hydrophobicity of the surfactant. For example, increasing a, b and d may increase the hydrophobicity of the surfactant containing the siloxane unit(s) shown in structural formula (N). Increasing c may reduce the hydrophobicity of the surfactant containing the siloxane unit(s) shown in structural formula (N).

In structural formula (O) the values of a, b, c, d e and f can be varied to change the total hydrophobicity of the surfactant. For example, increasing a, b and d may increase the hydrophobicity of the surfactant containing the siloxane unit(s) shown in structural formula (O). Increasing c, e and f may reduce the hydrophobicity of the surfactant containing the siloxane unit(s) shown in structural formula (O).

In structural formula (P) the values of a and b can be varied to change the total hydrophobicity of the surfactant. For example, increasing a may increase the hydrophobicity of the surfactant containing the siloxane unit(s) shown in structural formula (P). Increasing b may reduce the hydrophobicity of the surfactant containing the siloxane unit(s) shown in structural formula (P).

In structural formula (Q) the values of a and b can be varied to change the total hydrophobicity of the surfactant. For example, increasing a may increase the hydrophobicity of the surfactant containing the siloxane unit(s) shown in structural formula (Q). Increasing b may reduce the hydrophobicity of the surfactant containing the siloxane unit(s) shown in structural formula (Q).

In structural formula (R) the values of a and b can be varied to change the total hydrophobicity of the surfactant. For example, increasing a may increase the hydrophobicity of the surfactant containing the siloxane unit(s) shown in structural formula (R). Increasing b may reduce the hydrophobicity of the surfactant containing the siloxane unit(s) shown in structural formula (R).

As described above, the siloxane containing surfactants may provide advantageous properties over conventional surfactants, particularly in AM-EWOD systems where achieving a low electrowetting voltage is desirable. Figure 4 shows an example contact angle versus electrowetting voltage characteristic, showing the difference between a siloxane containing surfactant (silicone surfactant) and a conventional surfactant (Tween20). The siloxane containing surfactant is notable in that:

- There is a larger difference between the maximum and minimum contact angles, corresponding respectively to the un-actuated and actuated states, corresponding to stronger electrowetting actuation.
- The difference in voltage between the maximum and minimum contact angle values is smaller, corresponding to a lower electrowetting voltage.

In embodiments described above, the siloxane surfactant may be soluble in the silicone oil. In some embodiments, the siloxane surfactant is water soluble; this may be achieved by increasing the wt. % of the hydrophilic portion of the surfactant. Such embodiments may still provide a low surface tension siloxane surfactant. In such embodiments, the surfactant may be incorporated into the aqueous droplet. This may make it possible to increase the speed at which the droplets can be moved.

In some embodiments, the liquid droplet may contain the surfactant at a concentration ranging from about 0.001 to about 15% w/w. In other embodiments, the liquid droplet may contain the surfactant at a concentration ranging from about 0.001 to about 10% w/w. In other embodiments, the liquid droplet may contain the surfactant at a concentration ranging from about 0.001 to about 5% w/w.

In embodiments described above, the oil utilized is a silicone oil. In some embodiments, the oil may be a hydrocarbon oil material with the siloxane surfactant dissolved in it. Such embodiments may retain the advantages of the above-described embodiments while also enabling a wider range of oils to be used, thereby increasing the flexibility of the device to perform a range of chemistries. Some examples of hydrocarbon oils that may be utilized as the oil material in which the siloxane surfactant is dissolved include octane, decane, dodecane, tetradecane, hexadecane, and xylene.

In embodiments described above, the siloxane surfactant may be the only surfactant provided in the oil or liquid droplet. In some embodiments, one or more surfactants additional to the siloxane may be included in the oil and/or liquid droplet. The additional surfactants may be soluble in either the oil or the liquid droplet. In some embodiments where the

siloxane surfactant is provided in the oil, the additional surfactant(s) may be provided in the liquid droplet. In embodiments where the siloxane surfactant is provided in the liquid droplet, the additional surfactant(s) may be provided in the oil. Exemplary additional surfactants may be block copolymers based on ethylene oxide and propylene oxide (Pluoronic®), polyethoxylated sorbitan esters (Tween®), Sorbitan esters (Span®), polyoxyethylene glycol alkyl ethers (Brij®) and such like. One example of an additional surfactant is a poly(ethylene glycol)-poly(propylene glycol)-poly(ethylene glycol) triblock polymer.

**INDUSTRIAL APPLICABILITY**

The described embodiments may be used to provide an enhanced AM-EWOD device. In some embodiments, the AM-EWOD device may form a part of a lab-on-a-chip system. Such devices may be used in manipulating, reacting and sensing chemical, biochemical or physiological materials. Applications include healthcare diagnostic testing, material testing, chemical or biochemical material synthesis, proteomics, tools for research in life sciences and forensic science.

## Claims

1. An electrowetting on dielectric device, comprising:

   (a) a first substrate comprising electrodes at a surface of the first substrate configured to effect electrowetting mediated droplet operations;
   (b) a second substrate spaced from the surface of the first substrate to define an interior volume between the first substrate and the second substrate;
   (c) a liquid droplet disposed in the interior volume; and
   (d) a filler fluid disposed in the interior volume and surrounding the liquid droplet,

   wherein one or both of the liquid droplet and filler fluid contains a surfactant, the surfactant comprising a siloxane group represented by the structural formula:

   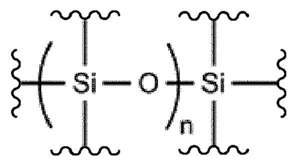

   where n≥1.

2. The electrowetting on dielectric device of claim 1, wherein the surfactant is provided at a concentration ranging from about 0.001 to about 10% w/w in the liquid droplet or the filler fluid.

3. The electrowetting on dielectric device of any one of claims 1 or 2, wherein the filler fluid comprises a silicone oil.

4. The electrowetting on dielectric device of any one of claims 1-3, wherein the filler fluid comprises:

   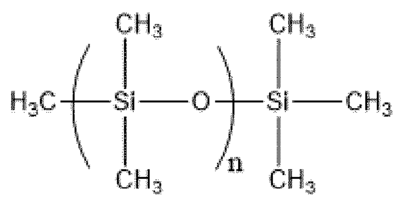

   where 7>n>1.

5. The electrowetting on dielectric device of any one of claims 1-4, wherein the filler fluid comprises a hydrocarbon oil.

6. The electrowetting on dielectric device of any one of claims 1-5, wherein the surfactant has no overall charge.

**7.** The electrowetting on dielectric device of any one of claims 1-5, wherein the surfactant is anionic or cationic.

**8.** The electrowetting on dielectric device of any one of claims 1-7, wherein the surfactant further comprises a polyol.

**9.** The electrowetting on dielectric device of any one of claims 1-8, wherein the surfactant further comprises polyethylene glycol.

**10.** The electrowetting on dielectric device of any one of claims 1-8, wherein the surfactant further comprises polyoxyethylene glycol ($-(CH_2CH_2-O-)_n$) where $n \geq 1$, or wherein the surfactant further comprises polyoxypropylene glycol ($-(CH_2CHCH_3-O-)_n$) where $n \geq 1$.

**11.** The electrowetting on dielectric device of any one of claims 1-8, wherein the surfactant further comprises a hydrocarbon chain $(CH_2)n$ where $n \geq 1$.

**12.** The electrowetting on dielectric device of any one of claims 1-8, wherein the surfactant is represented by one of the following structural formulas:

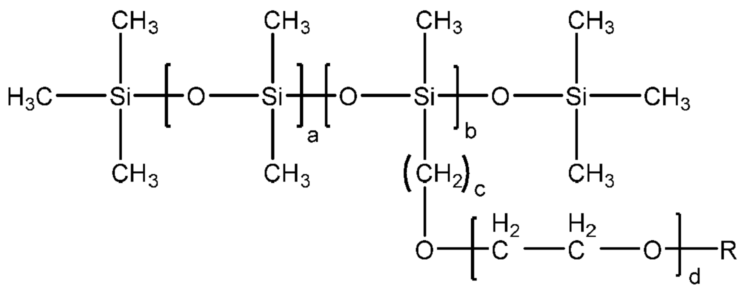

wherein $a \geq 1$, $b \geq 1$, $c \geq 1$, and $d \geq 1$ and
R= -H or $-CH_3$;

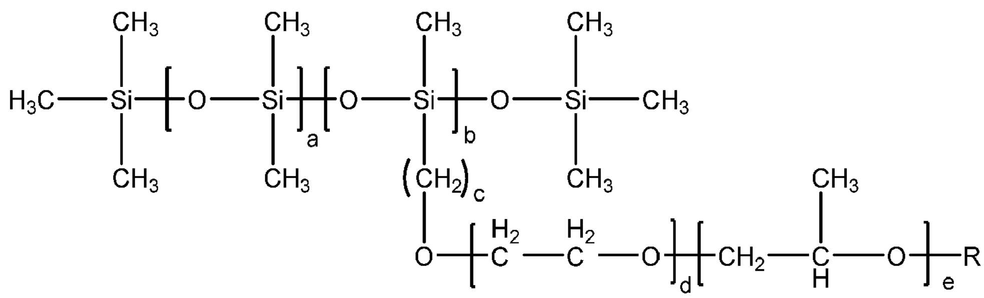

wherein $a \geq 1$, $b \geq 1$, $c \geq 1$, $d \geq 1$ and $e \geq 1$; and
R= -H or $-CH_3$;

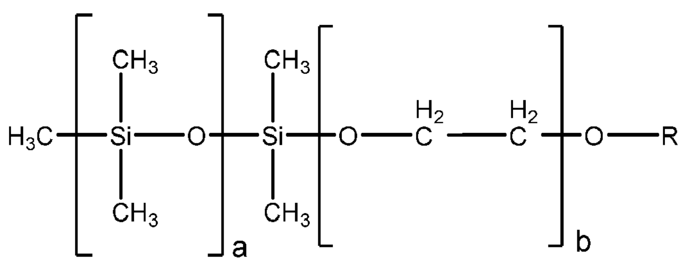

wherein $a \geq 1$ and $b \geq 1$; and
R= -H or $-CH_3$;

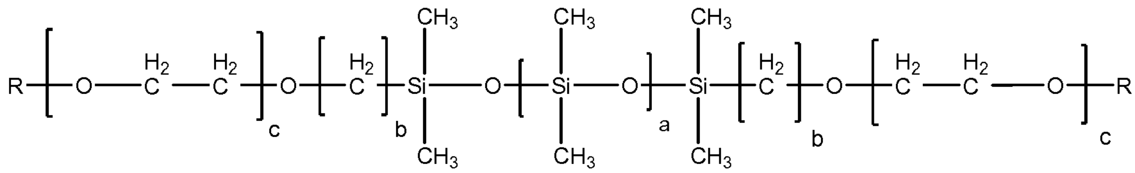

wherein a ≥ 1, b ≥ 1, and c ≥ 1; and
R= -H or $-CH_3$;

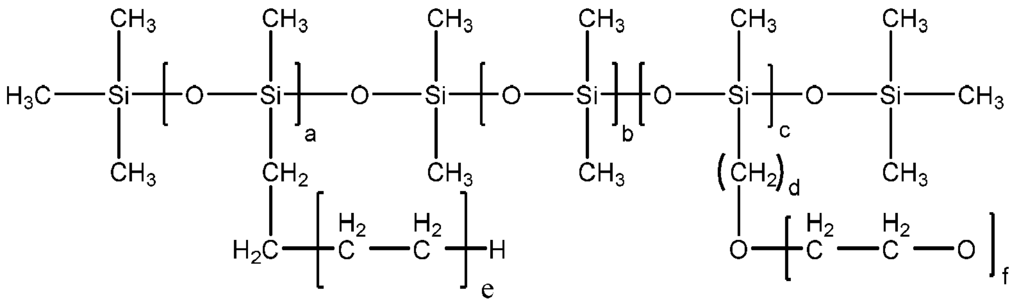

wherein a ≥ 1, b ≥ 1, c ≥ 1, d ≥ 1, e ≥ 1, and f ≥ 1; and
R= -H or $-CH_3$;

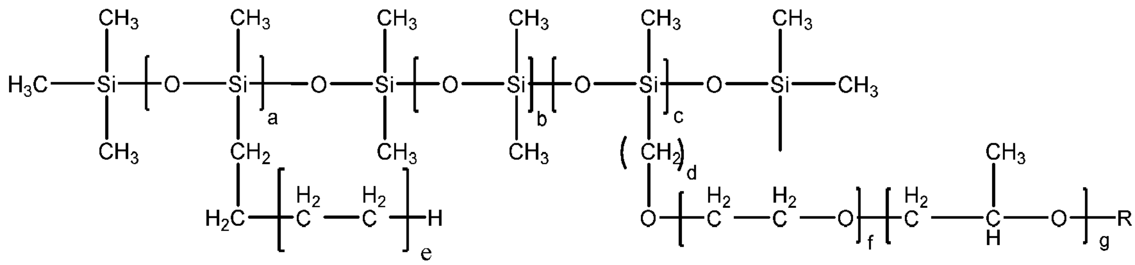

wherein a ≥ 1, b ≥ 1, c ≥ 1, d ≥ 1, e ≥ 1, f ≥ 1 and g ≥ 1; and
R= -H or $-CH_3$;

**13.** The electrowetting on dielectric device of any one of claims 1-12, wherein the filler fluid contains the surfactant, the surfactant soluble in the filler fluid, and optionally wherein the liquid droplet contains an additional surfactant.

**14.** The electrowetting on dielectric device of any one of claims 1-12, wherein the liquid droplet contains the surfactant and the surfactant is soluble in the liquid droplet.

**15.** Use of a surfactant comprising a siloxane group represented by the structural formula:

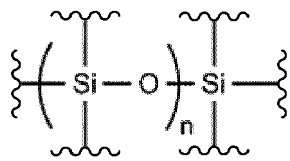

where n≥1,
the use comprising: providing the surfactant in one or both of a liquid droplet and a filler fluid, and introducing the liquid droplet and the filler fluid into an interior volume of an electrowetting on dielectric device comprising: (a) a first substrate comprising electrodes at a surface of the first substrate configured to effect electrowetting mediated droplet operations; and (b) a second substrate spaced from the surface of the first substrate to define the interior volume between the first substrate and the second substrate.

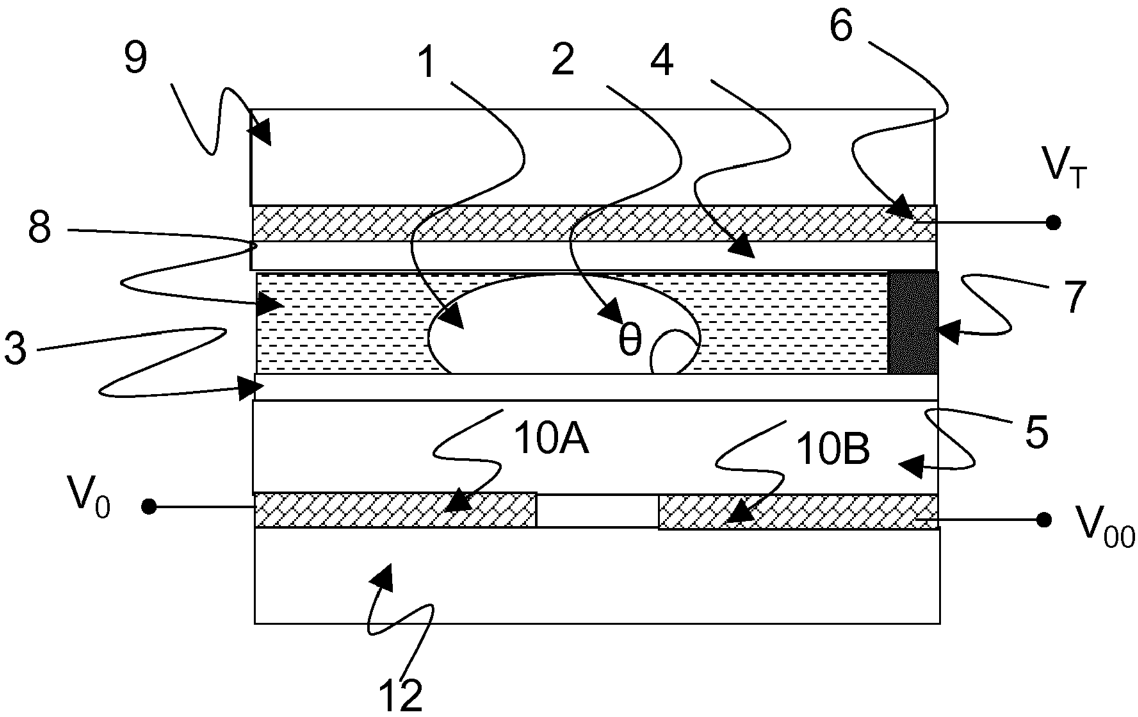


Figure 1

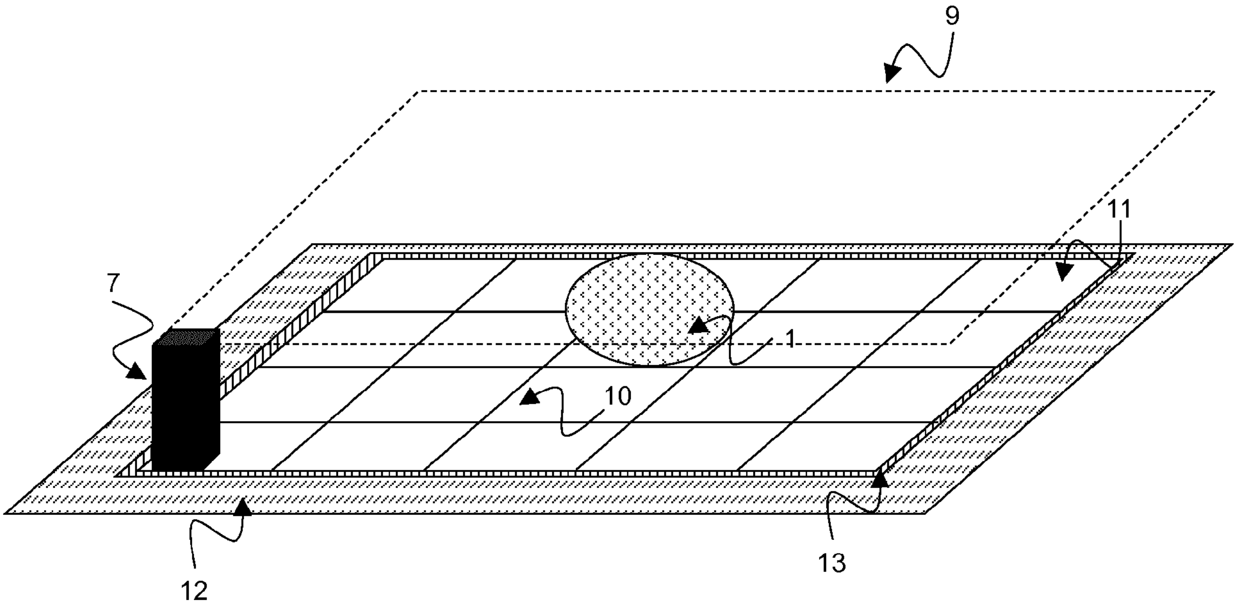


Figure 2

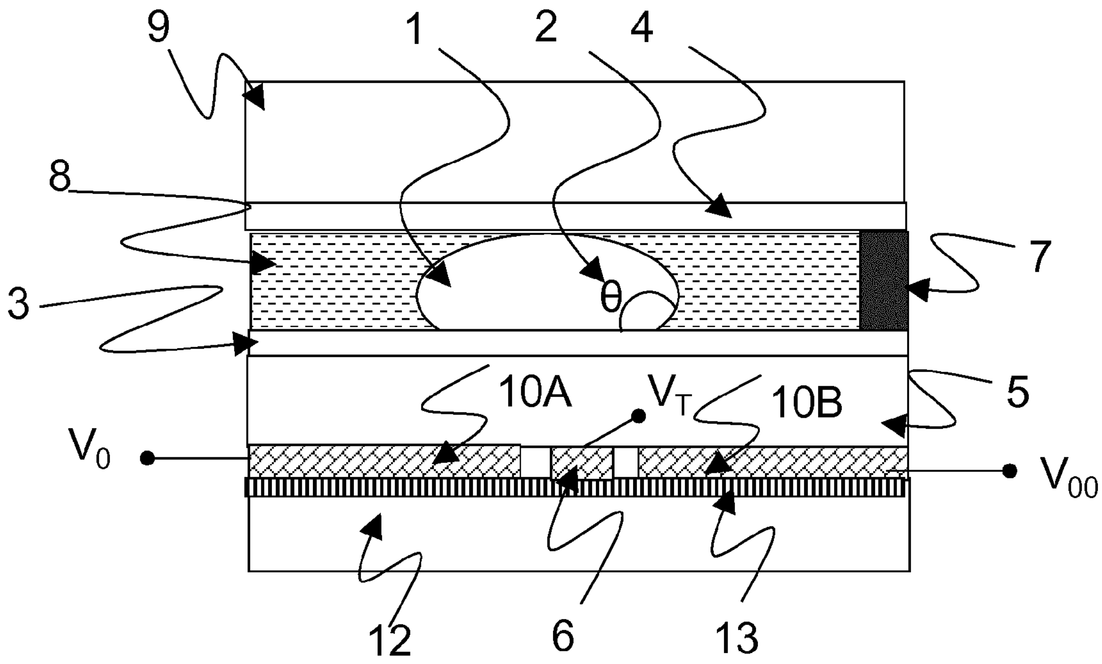


Figure 3

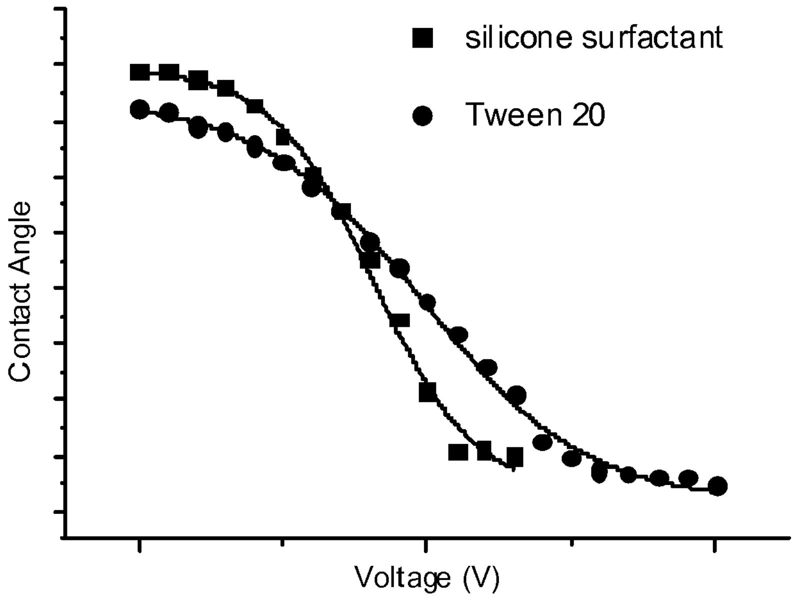


Figure 4

Europäisches Patentamt
European Patent Office
Office européen des brevets

# EUROPEAN SEARCH REPORT

Application Number
EP 17 18 7170

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | US 2011/180571 A1 (SRINIVASAN VIJAY [US] ET AL) 28 July 2011 (2011-07-28)<br>* paragraphs [0062], [0079] - [0081] *<br>* figure 1 * | 1-15 | INV.<br>B01L3/00 |
| X | WO 2009/021173 A1 (ADVANCED LIQUID LOGIC INC [US]; POLLACK MICHAEL [US]; ALLEN DWAYNE [US) 12 February 2009 (2009-02-12)<br>* page 6, line 25 - line 28 *<br>* page 12, line 4 - line 5 *<br>* figure 1 * | 1-15 | |
| X | US 2015/038344 A1 (POLLACK MICHAEL G [US] ET AL) 5 February 2015 (2015-02-05)<br>* paragraphs [0039], [0149] * | 1-15 | |
| X | EP 1 816 491 A1 (VARIOPTIC SA [FR]) 8 August 2007 (2007-08-08)<br>* paragraphs [0012], [0035] *<br>* figure 1a * | 1-15 | |
| | | | TECHNICAL FIELDS SEARCHED (IPC) |
| | | | B01L |

The present search report has been drawn up for all claims

2

| Place of search | Date of completion of the search | Examiner |
|---|---|---|
| The Hague | 8 December 2017 | Bischoff, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 18 7170

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2017

| Patent document cited in search report | Publication date | Patent family member(s) | Publication date |
|---|---|---|---|
| US 2011180571 A1 | 28-07-2011 | NONE | |
| WO 2009021173 A1 | 12-02-2009 | US 2011303542 A1 | 15-12-2011 |
| | | WO 2009021173 A1 | 12-02-2009 |
| US 2015038344 A1 | 05-02-2015 | AU 2011221243 A1 | 18-10-2012 |
| | | AU 2016204653 A1 | 21-07-2016 |
| | | CA 2825984 A1 | 01-09-2011 |
| | | DK 2539450 T3 | 30-05-2016 |
| | | EP 2539450 A2 | 02-01-2013 |
| | | EP 3072968 A1 | 28-09-2016 |
| | | ES 2565563 T3 | 05-04-2016 |
| | | HU E027972 T2 | 28-11-2016 |
| | | JP 5882234 B2 | 09-03-2016 |
| | | JP 6203876 B2 | 27-09-2017 |
| | | JP 2013520202 A | 06-06-2013 |
| | | JP 2016127851 A | 14-07-2016 |
| | | US 2013203606 A1 | 08-08-2013 |
| | | US 2013225450 A1 | 29-08-2013 |
| | | US 2013225452 A1 | 29-08-2013 |
| | | US 2015038344 A1 | 05-02-2015 |
| | | WO 2011106314 A2 | 01-09-2011 |
| EP 1816491 A1 | 08-08-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6565727 B
- US 6911132 B, Pamula
- US 7163612 B, Sterling
- EP 2404675 A, Hadwen
- US 8481125 B, Yi
- US 8980198 B, Srinivasan


### Non-patent literature cited in the description


- **R.B. FAIR.** Digital microfluidics: is a true lab-on-a-chip possible?. *Microfluid Nanofluid,* 2007, vol. 3, 245-281
- **O. RACCURT.** *J. Micromech. Microeng.,* 2007, vol. 17, 2217-2223
- **L. S. ROACH et al.** *Analytical Chemistry,* 2005, vol. 77 (3), 785-796